# EUROPEAN PATENT APPLICATION

(11) **EP 1 197 263 A1**
(43) Date of publication of application: **17.04.2002**
(21) Application number: 01203818.8
(22) Date of filing: 09.10.2001
(51) Int. Cl.: B01J 19/32

(54) **Structured multi-purpose packings and their use**

(30) Priority: 12.10.2000 DE 10050625
(71) Applicant: EC ERDÖLCHEMIE GMBH, D-50769 Köln (DE)
(72) Inventor: Gohrt, Axel, 51061 Köln (DE); Grub, Joachim, 41539 Dormagen (DE); Muller, Stephan, 50259 Pulheim (DE); Kaminsky, Stefan, 41539 Dormagen (DE)
(74) Representative: Preece, Michael

(57) **Abstract**

The versatile multi-purpose packing with the special structure has at least twofold functionality and contains material separation elements (1) and second functionality elements (2) provided in alternate layers, wherein the material separation elements have a profiled surface, and each of the second functionality elements has two or more closed chambers (3) provided on top of each other and filled with a physically, chemically or biologically active packing material in terms of the second functionality.

## Description

The present invention relates to a structured multi-purpose packing having at least two functionalities and containing material separation elements and second functionality elements provided in alternate layers, wherein the material separation elements have a profiled surface, and each of the second functionality elements has two or more closed chambers provided on top of each other and filled with physically, chemically or biologically active materials in terms of the second functionality, and the use of such structured multi-purpose packings.

In the process-engineering industry and in environmental protection, it is of advantage, time and again, to perform physical transport processes, such as a material separation by distillation, rectification or adsorption, together with chemical, biological or other physical processes, such as a reactive or bacterial conversion or adsorption, as a second functionality simultaneously in one process unit.

To be able to combine and optimally perform two or more different processes in a single process unit, different parameters must be flexibly variable depending on the considered material system and the special process requirements: For the realization of an optimum physical material exchange, on the one hand, the contact areas between the different fluid phases are the critical factor. On the other hand, for the second functionality, the residence times and the active surface areas are the critical factors. To be able to vary these different parameters in different ways, inserts with multi-purpose usefulness, i.e., at least twofold functionality and high flexibility, tailored in view of the intended application are required.

For certain heterogeneously catalyzed reactions in liquid phases, so-called catalyzing fixed-bed reactors are employed. EP-A-0 396 650 and EP-A-0 631 813 describe such devices which have stacked packing elements respectively composed of layers oriented along the main direction of flow. The interior spaces of the packing parts are formed by parallel channels in the form of a relief-like profile in the walls. In EP-A-0 631 813, the walls punctually touch in the interior region of the packing part and are partially connected by spot-welding or riveting. In both cases, the interior of the connected layers is designed in such a way that the filling of the total interspaces with catalyst material can be effected by loading the material from the upper side of the packing, i.e., from a single filling point. The packing elements of the catalyzing fixed-bed reactors are also suitable for a catalytic distillation process (rectification) when employed in one column together with other so-called structured packings which serve for material separation only.

Although such devices are capable of catalyzing chemical reactions, their critical disadvantage is a limited suitability for physical material separation and a lack of multi-purpose usefulness and flexibility. On the one hand, the poor physical material separation can be attributed to the undefined flow conduction of down-flowing liquid and rising gas in the interior of the column. On the other hand, the contact areas necessary for material separation are also too small. However, the insufficiently defined flow conduction of the liquid also leads to a negative influence on the chemical reaction because a complete wetting of the catalyst material and thus a high degree of utilization of the catalyst action cannot be achieved. Finally, the insufficiently defined gas conduction also causes an unnecessarily high pressure drop in the columns, which makes the treatment of temperature-sensitive substances difficult. To conclude, for the above reasons, a simple determination and optimization of design parameters, especially the separation performance and reactor performance, for different applications is not possible for the use of the known devices. In addition, on the one hand, it is not possible to vary the reactive zones and the contact areas, on the other hand, in an optimizing way in view of the special requirements of the considered material systems.

Another rather critical disadvantage of the previously described devices is that they must be constantly sprinkled and kept moist after their first use. If the constant sprinkling and moist-keeping is omitted, the catalyst material contained in the device will dry and shrink. The dry and free-flowing catalyst particles, e.g., ionexchange resin beads, will then sag into the lowermost region of the packing since all regions of a catalyzing segment are interconnected. Then, when the catalyst material is again wetted, the particles will swell again and cause an undesirable and disadvantageous expansion of the lower portion of the packing. This may result in substantial difficulties in the demounting and remounting of the packing and may even cause packings to burst. To conclude, the operative expenditure for the use of these devices increases due to the necessary sprinkling and moist-keeping of the described devices, which considerably detracts from the economical appeal of the overall process.

From DE-A-197 01 045 structured multi-purpose packings are known which consist of alternating layers of material separation elements and second functionality elements. The material separation elements are formed from structured fabric sheets or metal sheets, and the second functionality elements are respectively closed and have small chambers filled with physically, chemically or biologically active packing materials. The walls of the chambers are impermeable to the packing material and permeable to at least one fluid medium in the process. Due to the compartmental structure of these structured multi-purpose packing, an accumulation of catalyst particles and expansion in the lower portion of the packing is avoided, so that temporary drying of the packing becomes possible, which again increases the mounting and demounting flexibility of the packing.

As a material for the walls of the second functionality elements, DE 197 01 045 mentions metal-wire cloth, for example. In experiments it has been found that such second functionality elements made of steel-wire cloth do not always yield optimum results. For example, in reactive rectifications for the preparation of tertiary alcohols from the corresponding isoolefins and water on acidic ion exchangers using such multi-purpose packings, unsatisfactory results are achieved from an economical point of view.

Thus, it has been the object of the invention to provide improved structured multi-purpose packings which simultaneously exhibit excellent material separation properties and an excellent effectiveness of the chemical, biological or physical second functionality.

Surprisingly, it has now been found that a significant improvement of the effectiveness of the chemical, biological or physical process can be achieved by using a polymeric material for constituting the chamber walls of the second functionality elements.

The invention relates to structured multi-purpose packings containing material separation elements (1) and second functionality elements (2) provided in alternate layers, wherein the material separation elements have a profiled surface, and each of the second functionality elements has two or more closed chambers (3) provided on top of each other and filled with a physically, chemically or biologically active packing material, a space being provided between any two of the chambers, which space is bridged by a section (6) conducting a liquid, said structured multi-purpose packings being characterized in that the walls of the chambers of the second functionality elements are constituted by a polymeric material.

The material separation elements have a profiled, preferably corrugated, surface. They are usually formed of metal sheets (7), preferably of black plate, stainless steel, hastelloy, copper or aluminum, or structured fabric sheets, for example, based on plastic materials, such as Teflon.

Each of the second functionality elements has two or more closed chambers (3) provided on top of each other, preferably having a pillow shape, and filled with a physically, chemically or biologically active packing material, their walls being constituted by a polymeric material. Usually, the liquid-conducting sections (6) provided between the chambers are also constituted by the same polymeric material.

Suitable polymeric materials include polyamides, polyolefins or halogenated, preferably fluorinated, polyolefins. As said polyolefins, there may be employed, for example, polyethylene or polypropylene. As said halogenated polyolefins, there may be employed, for example, polytetrafluoroethylene or polyvinyl chloride. As the polyamide, nylon has proven useful. More preferably, polyethylene is employed as a material for the chamber walls and the liquid-conducting sections (6) of the second functionality elements.

The polymeric material having a good wettability by water is usually employed in the form of woven, knitted, braided or open-meshed fabrics which are impermeable to the packing material and permeable to at least one fluid medium in the process. In particular cases, preferably those having a chemical or biological second functionality, it may be important for the polymeric material to be permeable to all reaction partners to be reacted with each other.

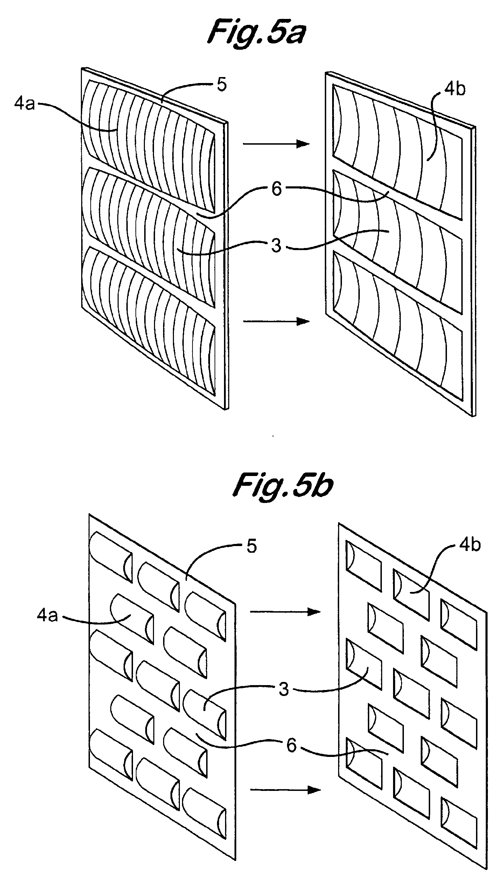

The physically, chemically or biologically active packing material for the chambers of the second functionality elements can be in either solid or liquid form. If a liquid packing material, for example, catalyzing liquids or absorbants or extractants, is used, the walls of the chambers made of polymeric material must be impermeable to the packing liquid while being permeable to at least one fluid or at least one fluid component of the reaction system. If necessary, the second functionality elements may also be supported in the middle by a metal-wire cloth layer in this case (see also Figure 5).

Said chemically or biologically active packing material is usually a catalytically active material. Packing materials which may be employed include, for example, ion exchangers, active charcoal, support materials with biofilms or extractants. As already described, the second functionality elements may also be stabilized by an additional metal-wire cloth layer or an inserted metal sheet.

In the structured multi-purpose packing, the material separation elements and second functionality elements are provided in alternate layers. In usual embodiments of the multi-purpose packing, the material separation elements and second functionality elements are in an arrangement parallel with the main flowing direction or displaced therefrom by an angle after being mounted in a reactor or column.

In the chambers of the second functionality elements, the down-flowing liquid contacts the active material, especially catalyst, contained therein. Thereafter, the liquid exits the chamber again, flows down the intermediate section and is meanwhile available for material exchange with the gas flowing upwards. The flat intermediate section provides for the liquid to be conducted to the next chamber in a defined way. The rising gas is passed along the second functionality elements with the aid of the material exchange elements which also serve as turbulence promoters for the gas flow.

The invention further relates to a process for the combined performance of a physical material separation with a chemical or biological process or with a second physical material separation process which is different from the first physical material separation using the structured multi-purpose packing according to the invention.

In the process according to the invention, the physical material separation may be, for example, distillation, rectification, absorption, adsorption or extraction. A physical process to be simultaneously performed can be selected, in principle, from the same methods of material separation. Chemical or biological processes to be simultaneously performed include, for example, bacterial conversions or chemical reactions. The chemical reactions may be, for example, alkylations, isomerizations, esterifications, etherifications, hydrations, dimerizations, oligomerizations or polymerizations.

Thus, the process according to the invention can be performed as a combination of a physical material separation and a chemical or biological second functionality, for example, as a heterogeneous reactive rectification, reactive absorption, reactive adsorption including adsorption to biofilms, or as a material separation with simultaneous biological conversion.

Further, the process according to the invention may also be combinations of different physical material separation mechanisms, such as rectification or adsorption as the first functionality and adsorption or extraction as a second functionality.

The process according to the invention has proven useful for a heterogeneous reactive rectification for the preparation of tertiary alcohols by reacting tertiary olefins having the same number of carbon atoms with water on an acidic ion exchanger.

Preferably, the process is a reactive rectification for the preparation of tertiary C₄ to C₈ alcohols, preferably C₅, C₆ or C₇ alcohols, especially tertiary amyl alcohol (TAA), by reacting the corresponding tertiary olefins, especially isoamylene, with water on an acidic ion exchanger.

By using the structured multi-purpose packing according to the invention, for example, in the preparation of TAA from isoamylene and water, a substantially higher amount of TAA, based on the isoamylene employed, and a longer service life of the catalyst are achieved as compared to using a structured multi-purpose packing in which the chamber material of the second functionality elements is not a polymeric material, but a metal, for example, steel.

The reactive rectification according to the invention for the preparation of tertiary alcohols is performed with employing tertiary olefins. These tertiary olefins can be employed either in the form of distillation cuts containing the corresponding tertiary olefin, or else in an enriched or pure quality. Isoamylene (mixture of the isomers 2-methylbutene-1 and 2-methylbutene-2) can be employed, for example, in the form of a C₅ distillation cut which usually contains at least 5%, preferably at least 10%, by weight of isoamylene. In principle, such cuts contain, in addition to isoamylene, straight-chain C₅ olefins, certain amounts of the corresponding alkanes and some higher and lower hydrocarbon components. Preferably, an enriched isoamylene stream is used which usually contains about from 20 to 95% by weight of isoamylene. More preferably, an essentially pure isoamylene stream is employed which contains at least 95% by weight of isoamylene. Such an essentially pure isoamylene stream is obtained, for example, from the cleavage of tertiary amyl methyl ether (TAME).

In this reactive rectification, all known acidic cation exchangers obtainable by the polymerization or copolymerization of aromatic vinyl compounds followed by sulfonation can be employed as catalysts for the hydration of the tertiary olefins. Examples of aromatic vinyl compounds which may be employed for polymerization or copolymerization include: styrene, vinyl toluene, vinyl naphthalene, vinylethylbenzene, methylstyrene, vinylchlorobenzene and vinylxylene. The preparation method for these polymers or copolymers can be varied broadly. The homo- or copolymerization of the mentioned monomers can also be effected, for example, in the presence of polyvinyl compounds for cross-linking: Suitable polyvinyl compounds which may be used include divinylbenzene, divinyltoluene or divinylphenyl ether. The homo- or copolymers can be prepared in the presence or absence of solvents or dispersants using a wide variety of initiators, such as inorganic or organic peroxides or persulfates.

As acidic cation exchangers, sulfonated phenol-formaldehyde resins, sulfonated cumarone-indene condensation products, sulfonated polystyrenes or sulfonated styrene-divinylbenzene resins, above all, employed in their respective H⁺ forms, have proven useful. Preferably, sulfonated styrene-divinylbenzene resins having a degree of cross-linking (divinylbenzene content) of from 2 to 65% by weight, preferably from 8 to 25% by weight, are employed. Such acidic cation exchangers are known to the skilled person and commercially available under many designations.

The process according to the invention is performed by loading the acidic cation exchangers with such an amount of total feed mixture that a liquid hourly space velocity (LHSV) of 0.05-1 I of feed mixture per liter of catalyst per hour, preferably 0.1-0.4 I of feed mixture per liter of catalyst per hour, is achieved.

By varying the amount of water employed in the preparation of tertiary alcohols in a reactive rectification by the process according to the invention, the product range of the conversion and the service life of the catalyst can be influenced. The amount of water employed can be superstoichiometric, equimolar or substoichiometric, based on the tertiary olefin employed. Preferably, an excess of water of from 10 to 90 mole percent, more preferably of from 30 to 70 mole percent, is employed. In particular, for the preparation of TAA from isoamylene and water, an excess of water of from 40 to 50 mole percent is used, based on the isoamylene employed.

When a lower amount of water is used, dimerization and in part also oligomerization of the tertiary olefin occur to a higher extent. The dimers and oligomers formed are very hydrophobic so as to impede the transport of water to the reaction centers. Since the water cannot react with the tertiary olefin unimpeded, low conversions result. In addition, dimers and oligomers deposit in the pores of the ion exchangers, can be hardly removed from the catalyst, for example, by rinsing, and thus cause an irreversible change of the initial morphology of the catalyst. Since part of the acidic sites of the catalyst are blocked in this way, the activity and thus the service life of the ion exchangers decrease.

On the other hand, the excess of water must not be too high either, since otherwise aqueous and organic phases form in the bottoms of the reactor of the reactive rectification, which results in the occurrence of delayed boiling. This leads to an unsteady operation of the reactor and prevents a good loading of the catalytic packing and thus a continuous preparation of the tertiary alcohols.

The reactive rectification according to the invention for the preparation of tertiary alcohols yields the tertiary alcohol in a purity of from 50 to above 99% by weight, preferably from 70 to 95% by weight, more preferably from 85 to 90%. If a further purification of the tertiary alcohol is desired, the reactive rectification may be followed by another distillation of the tertiary alcohol. Using azeotropic distillation with water separation, purities of above 99% by weight can be achieved. How to perform such a distillation is sufficiently known to the skilled person.

As compared to multi-purpose packings whose second functionality elements have chamber walls based on steel, the yields in the process according to the invention can be substantially improved by using the multi-purpose packings having chamber walls based on a polymeric material. At the same time, the service life of the chemically, biologically or physically active material contained in the chambers of the second functionality elements is clearly increased. Perhaps, when a polymeric material is used for the chamber walls, the reaction components have better access to the reactive sites of the active material in the chambers.

In addition, it is possible to vary the number and volume of the second functionality elements and the number of the material separation elements depending on the problem considered, and to combine them in a modular way, so that the material separation properties, on the one hand, and the effectiveness of the second functionality, on the other hand, can be adapted to the requirements of the material or reaction system considered. Thus, an excellent effectiveness and a high application flexibility are achieved with the multi-purpose packing according to the invention.

In the following, the structure of the structured multi-purpose packings and the reactor for a reactive rectification for the preparation of tertiary alcohols using. a structured multi-purpose packing is explained in more detail by drawings.

Figures 1a, b and c show a top view of different embodiments of the structured multi-purpose packing.

Figures 2a and b show a sectional front view of different embodiments of the second functionality element of the structured multi-purpose packing having closed chambers.

Figures 3a and b show a sectional side view of different embodiments of the second functionality element of the structured multi-purpose packing having closed chambers.

Figures 4a and b show a perspective view of different embodiments of the structured multi-purpose packing having second functionality elements and material separation elements.

Figures 5a and b show a front view of different embodiments of the second functionality element of the structured multi-purpose packing with disassembled walls.

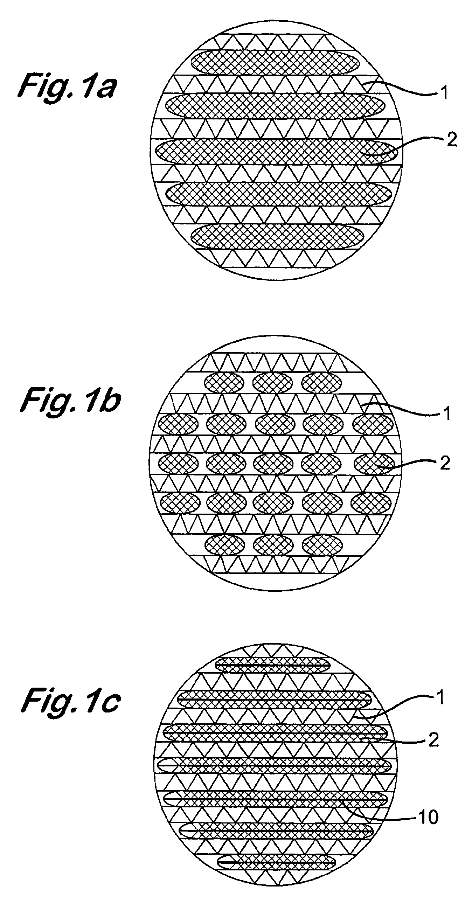

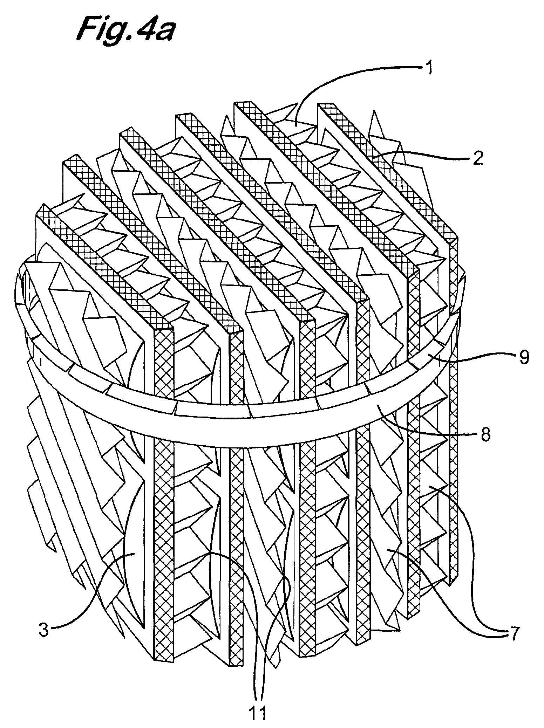

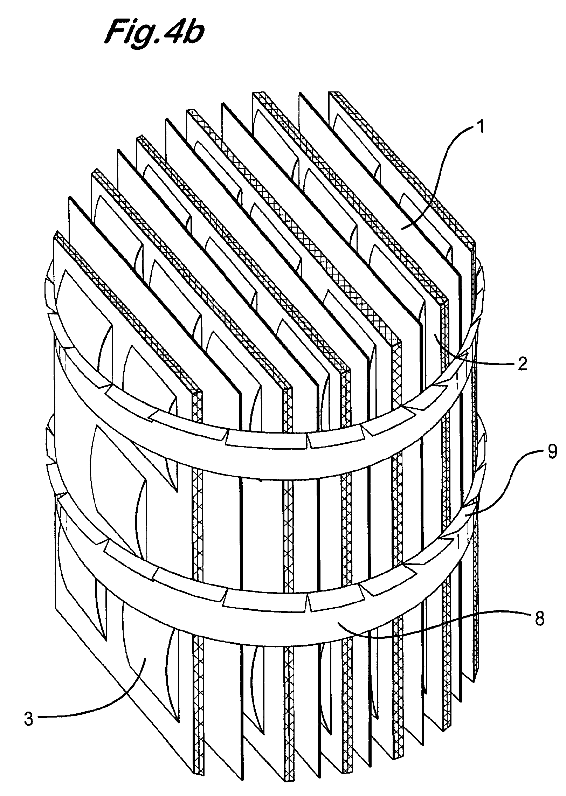

As shown in Figures 4a and 4b, the material separation elements (1) and second functionality elements (2) represented in Figures 1a, b and c are provided in alternate layers. The number and volume of the second functionality elements and the number of the material separation elements can be varied depending on the reaction system considered, which is illustratively shown in the different embodiments in Figures 1a, b and c. Therefore, the residence times and effective surface areas in the second functionality elements as well as the contact areas in the material separation elements can be tailored in view of the material system considered. When mounted, the second functionality elements can be reinforced by fluid-permeable stabilizing metal sheets (10) as in Figure 1c, which is not necessarily required for functional reasons, however, cf. Figures 1a and b.

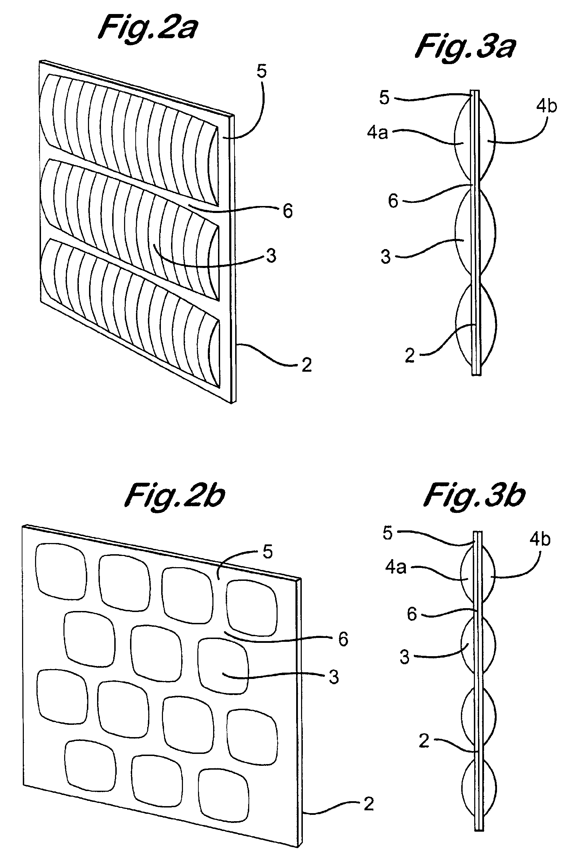

In Figures 2a and b, a front view of different embodiments of the second functionality element is seen. In all embodiments, the completely closed and sufficiently small chambers (3) provided on top of each other which are filled, for example, with catalytic, adsorbing or biologically active material can be seen. The walls of the chambers which consist of a polymeric material are fluid-permeable but impermeable to the packing material. As shown in Figure 2b, a plurality of chambers (3) can be arranged in a horizontal layer and can be alternately displaced in the next lower layer. It is also possible to provide only one closed chamber in every horizontal layer, as in Figure 2a. The chambers (3) and conducting sections (6) together form a vertical sheet layer (2).

Figures 3a and b show side views of a second functionality element having closed chambers (3). The chambers whose walls are constituted by the polymeric material are formed by tightly joining the upper and lower sides of the lateral walls 4a and 4b of the second functionality elements both at the edges (5) and in the chamber interspaces (6), so that the chambers are tightly closed with respect to the packing material. This joining if effected by welding, preferably using ultrasound. It is useful to leave a little free space between the second functionality elements and the edges of the packing in order to facilitate flowing around the second functionality elements.

Figures 4a and b show a perspective view of an element of the structured multi-purpose packing. The arrangement of the different functional parts in alternating layers can be seen. The material separation elements (1) which exclusively serve the function of material separation consist of structured fabric sheets or metal sheets (7) with different profiles. It is advantageous if the orientation of the channels of the fabric sheets changes alternately. A wide variety of designs of structured fabric sheets can be employed, the most suitable being selected to provide a purposeful optimization with respect to the intended application of the multi-purpose packing. At their points of contact (11), the different functional units can be tightly joined, but this may also be omitted in favor of a higher flexibility. A skirt (8) with lobe-like protrusions (9), as usual with structured packings, tightly encloses the functional elements and in addition stabilizes the multi-purpose packing within the column.

The packing element shown is designated for a multi-purpose column having a circular cross-section, but the realization of the multi-purpose packing is basically possible for all cross-sections.

Figures 5a and b show different embodiments of the configuration of a second functionality element. Two preformed polymeric fabric sheets (4a and 4b) are joined together. The generated chambers (3) are filled prior to being closed. A complete filling of the chambers is not necessary. The filling amount is also variable to provide a purposeful optimization with respect to the intended use.

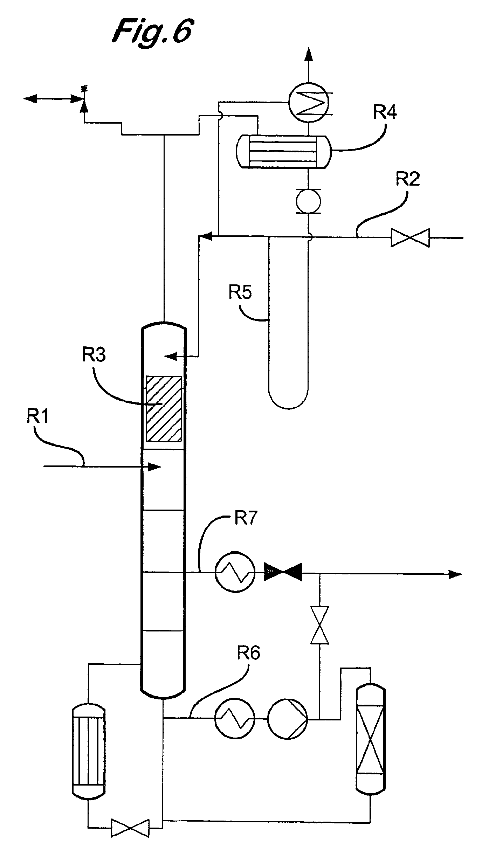

Figure 6 shows the structure of a reactor for the preparation of tertiary alcohols in a reactive rectification using a structured multi-purpose packing according to the invention. The feeding of the tertiary olefin stream is done through feed line (R1) below the structured multi-purpose packing. The feeding of the water is done through feed line (R2) above the structured multi-purpose packing. Thus, the tertiary olefin and the water flow in counter-current through the structured multi-purpose packing (R3) over the ion exchanger contained therein, filled in chambers. At the head of the column, unreacted tertiary olefin is condensed in an azeotrope with water (in the case of TAA preparation from 98% by weight of isoamylene and 2% by weight of water) (R4) and recirculated into the column together with fresh water above the catalytic packing (R5). The tertiary alcohol prepared and excess water go into the bottoms of the reactor; from there (R6) are optionally through a side stream (R7), they are removed and, in the case where a further purification is desired, fed to a distillation column for azeotropic distillation.

### Examples

### Comparative Examples 1 and 2 (CE1 and CE2):

The preparation of tertiary amyl alcohol (TAA) is effected by reacting isoamylene and water in a continuously operated reactive rectification in the reactor shown in Figure 6. The diameter of the column is 55 mm. The diameter of the packing is 213 mm. The setting of the quantity recycled is 25 kg/h at an infinite recycle ratio. The temperature in the reactor is about 60°C at the level of the multi-purpose packing and between 110 and 125 °C in the bottoms for a total pressure of 2.2 bar in the column.

The multifunctional packing Montz Multipak® of Montz GmbH in which the walls of the chambers of the second functionality elements are made of steel serves as the structured multi-purpose packing. This multi-purpose packing is filled with about 4 kg (corresponding to 5.5 liters) of a styrene-divinylbenzene resin containing acidic sulfur groups (Lewatit® K26 31 of Bayer AG).

An isoamylene stream obtained by the cleavage of tertiary amyl methyl ether and having a purity of above 99% by weight of isoamylene serves as the feed stream.

The remaining experimental conditions and the results of the reactive rectification are shown in Table 1.

### Examples 1 and 2 (E1 and E2):

The performance is effected by analogy with Comparative Examples 1 and 2. The multifunctional packing employed is identical with the multifunctional packing Multipak® of Montz GmbH, but the chambers of the second functionality elements are not made of steel, but of polyethylene fabric.

The remaining experimental conditions and the results of the reactive rectification are shown in Table 1.

**Table 1:**

| | CE1 | E1 | CE2 | E2 |
|---|---|---|---|---|
| isoamylene feed stream [g/h] | 800 | 800 | 1200 | 1200 |
| water feed [g/h] | 224 | 202 | 312 | 306 |
| ratio of water/isoamylene in the feed stream [g/g] | 0.28 | 0.25 | 0.26 | 0.26 |
| TAA production [g/h] | 668 | 994 | 887 | 1448 |
| TAA content in the bottoms [%] | 69.5 | 97.8 | 55.6 | 97.7 |
| TAA conversion, based on isoamylene feed stream [%] | 67.1 | 94.0 | 58.2 | 95.9 |

## Claims

1. Structured multi-purpose packings containing material separation elements (1) and second functionality elements (2) provided in alternate layers, wherein the material separation elements have a profiled surface, and each of the second functionality elements has two or more closed chambers (3) provided on top of each other and filled with a physically, chemically or biologically active packing material, a space being provided between any two of the chambers, which space is bridged by a section (6) conducting a liquid, **characterized in that** the walls of the chambers of the second functionality elements are constituted by a polymeric material.

2. The structured multi-purpose packings according to claim 1, **characterized in that** the polymeric material comprises polyamides, preferably nylon, polyolefins, preferably polyethylene, or halogenated, preferably fluorinated, polyolefins, especially polytetrafluoroethylene or polyvinyl chloride.

3. The structured multi-purpose packings according to claim 1 or 2, **characterized in that** the walls of the chambers of said second functionality elements are in the form of woven, knitted, braided or open-meshed fabrics.

4. The structured multi-purpose packings according to one or more of claims 1 to 3, **characterized in that** said physically, chemically or biologically active packing material for the chambers of the second functionality elements is in a solid or liquid form.

5. The structured multi-purpose packings according to one or more of claims 1 to 4, **characterized in that** said packing material comprises ion exchangers, active charcoal, support materials with biofilms or extractants.

6. A process for the combined performance of a physical material separation with a chemical or biological process or with a second physical material separation process which is different from the first physical material separation, **characterized by** employing a structured multi-purpose packing according to one or more of claims 1 to 5.

7. The process according to claim 6, **characterized in that** said physical material separation is a distillation, rectification, absorption, adsorption or extraction.

8. The process according to claim 6, **characterized in that** said chemical process is an alkylation, isomerization, esterification, etherification, hydration, dimerization, oligomerization or polymerization.

9. The process according to claim 6, **characterized by** being a heterogeneous reactive rectification, reactive absorption, reactive adsorption, adsorption to biofilms, or a material separation with simultaneous biological conversion.

10. The process according to claim 9 for the preparation of tertiary alcohols by reacting tertiary olefins having the same number of carbon atoms with water on an acidic ion exchanger.

11. The process according to claim 9 for the preparation of tertiary C₄ to C₈ alcohols, preferably C₅, C₆ or C₇ alcohols, especially tertiary amyl alcohol, by reacting the corresponding tertiary olefins, especially tertiary C₅, C₆ or C₇ olefins, especially isoamylene, with water on an acidic ion exchanger.
